# EUROPEAN PATENT APPLICATION

(11) **EP 3 220 189 A1**
(43) Date of publication of application: **20.09.2017**
(21) Application number: 17161409.2
(22) Date of filing: 16.03.2017
(51) Int. Cl.: G02C 1/00, G02C 9/00

(54) **MYOPIC SUNGLASSES**

(30) Priority: 16.03.2016 CN 201620198772 U
(71) Applicant: Wang, Daomin, Shenzhen, Guangdong 518052 (CN)
(72) Inventor: Wang, Daomin, Shenzhen, Guangdong 518052 (CN)
(74) Representative: Spittle, Mark Charles

(57) **Abstract**

A pair of sunglasses comprises, a glasses underframe 1 having myopic lenses 4, and a sunglasses face frame 2 having tinted lenses7. The myopic glasses underframe 1 is provided with a first groove 8 in which a first magnet 11 is mounted. The sunglasses face frame 2 is provided with a second groove in which a second magnet 12 is mounted. In use, the sunglasses face frame 2 is mountable to the myopic glasses underframe 1 by the attractive force between the first magnet 11 and the second magnet 12. The myopic sunglasses provided by the present application are convenient to wear, firm in structure and not easily damaged or scratched.

## Description

### Field of the Disclosure

The present application relates to the technical area of glasses, in particular, relates to a kind of myopic sunglasses.

### Description of the Related Art

Persons suffering from myopic eyes need to wear myopic glasses to correct vision. Therefore, when they encounter shining of strong sunlight in summer, these persons cannot wear sunglasses to avoid harmful stimulation to eyes from strong sunlight.

In order to solve the above problems, people invented new types of myopic sunglasses, commonly including dyed myopic sunglasses, color-changeable myopic sunglasses, integrated myopic sunglasses and add-on chip myopic sunglasses. Due to the lack of perspective rates, dyed myopic sunglasses will increase eye fatigue and affect vision acuity. Because of the high price, color-changeable sunglasses are difficult to be promoted or used widely. Integrated myopic sunglasses render sunglasses' lens and myopic lens on one pair of glasses, which are to be switched by being turned up and down, so they cannot be used as normal myopic lens. Add-on chip myopic sunglasses can fix sunglasses on the outside of myopic lens through the designing of hanging clamp pieces, so they are comparably more practical. But due to the diversity of forms of spectacle frames as well as different widths and thickness of nasal frames, when clamping distances of the hanging clamp pieces are too wide, the hanging clamp piece could not combine very tightly to the myopic glasses, so the sunglasses are liable to fall off from the myopic lens, while when the clamping distances are too narrow, then sunglasses cannot be worn and the hanging clamp pieces may scratch the underframe of the myopic lens.

### SUMMARY

It is an object of the present application to provide a type of myopic sunglasses, which are convenient to be worn, firm in structure and not liable to be damaged or scratched.

A type of myopic sunglasses, including myopic glasses underframe and sunglasses face frame, the inner circle of the myopic glasses underframe is provided with first groove, the first groove is provided with first magnet group, the sunglasses face frame is provided with second groove, the second groove is provided with second magnet group, and the sunglasses face frame is hanged on the myopic glasses underframe by the adhesive force between the first magnet group and the second magnet group.

The beneficial effects of the myopic sunglasses disclosed in the application are that the myopic sunglasses connected tightly by magnet is not liable to fall off, convenient to be worn, firm in structure and not easy to be damaged or scratched.

### BRIEF DESCRIPTION OF THE DRAWINGS

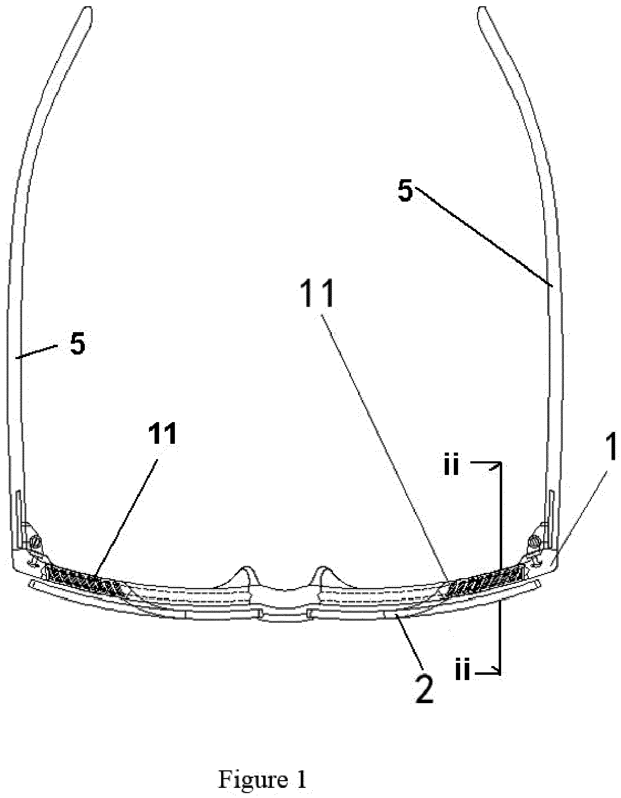

Figure 1 is a schematic structural diagram of the myopic sunglasses of the present application.

### DETAILED DESCRIPTION

Following is the further description of the present application with reference to detailed embodiments and attached drawings.

A method for manufacturing myopic sunglasses is provided, including the method for manufacturing myopic glasses underframes and the method for manufacturing sunglasses face frame.

The method for manufacturing myopic glasses underframe includes the following steps:
Put plastic materials into a CNC fine carving machine for carving the inside and outside of the rims; Put to a roller for grinding; Carve the first groove in the inner side edge of the inside of the rims; Place the first magnet into the first groove, and fill the first groove with resin adhesive; Dry; Grind, to make myopic glasses underframe;
The method for manufacturing sunglasses face frame includes the following steps: Weld the metal frame provided with the second groove into glasses face frame; Grind; conduct electroplating; and attach the second magnet group into the second groove with glue so as to make sunglasses face frame;
Assemble the sunglasses face frame and the myopic glasses underframe by the adsorptive force between the first magnet group and the second magnet group.

The produced myopic sunglasses connected tightly by magnet, is not liable to fall off, convenient to wear, firm in structure and not easy to be damaged or scratched.

An embodiment of the invention will now be described by way of example only and referring to the drawings, in which:
Figure 1 is a top view of myopic sunglasses according to the invention; and
Figure 2 is a sectional view along the line ii-ii of Figure 1.

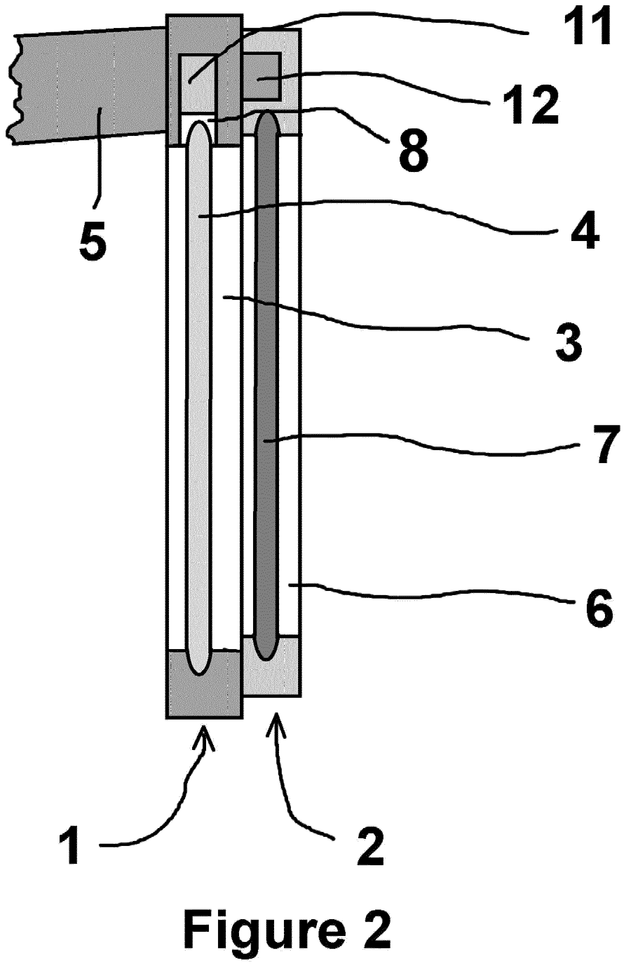

Referring to Figures 1 and 2 of the drawings, a type of myopic sunglasses including myopic glasses underframe 1 and sunglasses face frame 2. The underframe 1 is formed of a plastics material and comprises a pair of rims 3 holding respective myopic lenses 4. The rims 3 are interconnected by a nose bridge and a pair of temple arms 5 extend rearwardly, so that the myopic glasses underframe 1 can be worn in the conventional manner. The sunglasses face frame 2 is formed of a metal material and comprises a pair of rims 6 holding respective tinted lenses or optical filters 7. The rims 6 are interconnected by a nose bridge.

The inwardly-facing surface of the rims 3 of the myopic glasses underframe 1 are each provided with a first groove 8 at a point disposed above the lenses 4. The grooves 8 are formed before the lenses are fitted and each face inwardly towards the lens aperture. Each first groove 8 is provided with a first magnet 11, the first magnet 11 being fixed in the first groove 8 by a resin adhesive filled in the first groove. The position of the grooves 8 help to hide it from view and thereby makes the underframe 1 less unsightly.

The inner face of the rims 6 of the sunglasses face frame 2 are each provided with a second groove at a point disposed above the lenses or filters 7. Each second groove is provided with a second magnet 12, the second magnet 12 being attached in the second groove with adhesive. In this way, when desired, the sunglasses face frame 2 can be hung onto the myopic glasses underframe 1 by the magnetic attractive force between the first magnet 11 and the second magnet 12.

Finally, it is to be noted that the above embodiments are merely illustrative of the technical solution of the present application, and are not intended to limit the scope of protection of the present application. In particular, the invention is not limited to myopic glasses and could be used on hyperopic glassed. Although the present application is described in detail with reference to the preferred embodiments, it should be understood by those skilled in the art that modifications and equivalents may be made to the technical solution of the present application without departing from the spirit and scope of the technical solution.

## Claims

1. A pair of sunglasses, comprising a glasses underframe and sunglasses face frame, the myopic glasses underframe being provided with a first groove, the first groove being provided with a first magnet, the sunglasses face frame being provided with a second groove, the second groove being provided with a second magnet, and the sunglasses face frame being mountable to the myopic glasses underframe by an attractive force between the first magnet and the second magnet.

2. A pair of sunglasses as claimed in claim 1, comprising a pair of first grooves on respective opposite sides of the underframe, each first groove being provided with first magnet.

3. A pair of sunglasses as claimed in claim 2, comprising a pair of second grooves on respective opposite sides of the face frame, each second groove being provided with second magnet.

4. A pair of sunglasses as claimed in any preceding claim, in which the underframe comprises a pair of rim portions in which respective optical lenses are mounted, the face frame comprising a pair of rim portions in which respective optical filters are mounted.

5. A pair of sunglasses as claimed in claim 5, in which the magnets are disposed in grooves formed in the upper side of each rim.

6. A pair of sunglasses as claimed in claim 5 or claim 6, in which each first groove is formed in an inner side surface of the respective rim and faces towards the lens therein.

7. A pair of sunglasses as claimed in any preceding claim, in which the second groove is formed in a rear surface of the face frame.

8. A myopic sunglasses, including myopic glasses underframe and sunglasses face frame, inner circle of the myopic glasses underframe is provided with first groove, the first groove is provided with first magnet group, the sunglasses face frame is provided with second groove, the second groove is provided with second magnet group, and the sunglasses face frame is hanged on the myopic glasses underframe by absorptive force between the first magnet group and the second magnet group.
